# EUROPEAN PATENT APPLICATION

(11) **EP 2 047 947 A1**
(43) Date of publication of application: **15.04.2009**
(21) Application number: 07425638.9
(22) Date of filing: 12.10.2007
(51) Int. Cl.: B23Q 5/04, B23Q 11/12, B23Q 11/14

(54) **Tool-holding gearbox for machine tools**

(71) Applicant: MARIO PINTO S.p.A., 10135 Torino (IT)
(72) Inventor: Bronzino, Pier Domenico, 10040 Caprie (TO) (IT)
(74) Representative: Spandonari, Carlo

(57) **Abstract**

A box (11) incorporates a chuck (33) provided with a driven gear (32) meshing with a corresponding driving gear (26) supported on the tool-holding turret (12). A cooling member consisting of a block (44, 144) provided with a first face (46) arranged into contact with the outer wall of the box (11), and with a sealed passage (48, 148) extending from an inlet port (54, 154) connected to coolant-feeding means to an outlet port (58, 158) to which a nozzle (60, 160) pointing towards the machining area of the chuck is connected.

## Description

The present invention relates to a tool-holding gearbox for machine tools.

As known, in certain types of machine tools the tool is driven by a motor having its axis lying at right angles to the axis of rotation of the tool, via a bevel gearbox which is mounted on the turret of the machine tool. The gearbox typically comprises a driving bevel gear, which is supported on bearings and is connected to the motor, which meshes with a driven bevel gear which is mounted on a tool-holding shaft and is also supported on bearings.

As well known to the person skilled in the art, the temperature of the gearbox is considerably liable to rise, mainly during high speed machinings, e.g., up to 80-100 °C at a speed of 5000-6000 rpm, because of the friction of the rotating parts within the gearbox, in particular the bearings and the bevel gears. This circumstance both affects the accuracy of the machining, because of the thermal distortions to which the parts inside and outside of the gearbox are subjected, and shortens the life of the gearbox, because the overheating of the rotating parts causes the latter to wear quickly. Furthermore, in order to prevent the gearbox from overheating, nowadays it is necessary to stop the machining at intervals to allow the gearbox to be cooled off; this circumstance, of course, affects the productivity of the machine.

Therefore, it is an object of the present invention to provide a bevel gearbox which is improved in such a way as to reduce the heating, and in particular to prevent the overheating, of its inner and outer parts.

A particular scope of the invention is to provide a gearbox in which the temperature substantially stabilizes, after an initial transient, on a low value which does not affect the machining accuracy and reduces the wearing.

The above scopes and other advantages, which will better appear below, are achieved by the gearbox having the features recited in claim 1, while the other claims state other advantageous, though secondary, features of the invention.

The invention will be now described in more detail with reference to a few preferred, non-exclusive embodiments, shown by way of non-limiting example in the attached drawings, wherein:
Fig. 1 is a perspective view of the gearbox according to the invention;
Fig. 2 is a plan view of the gearbox of Fig. 1;
Fig. 3 is a view in cross-section made along line III-III of Fig. 2;
Fig. 4 is a view in cross section made along line IV-IV of Fig. 2;
Fig. 5 is a plan view of a gearbox according to an alternative embodiment of the invention;
Fig. 6 is a view in cross-section made along line VI-VI of Fig. 5;
Fig. 7 is a view in cross section made along line VII-VII of Fig. 5.

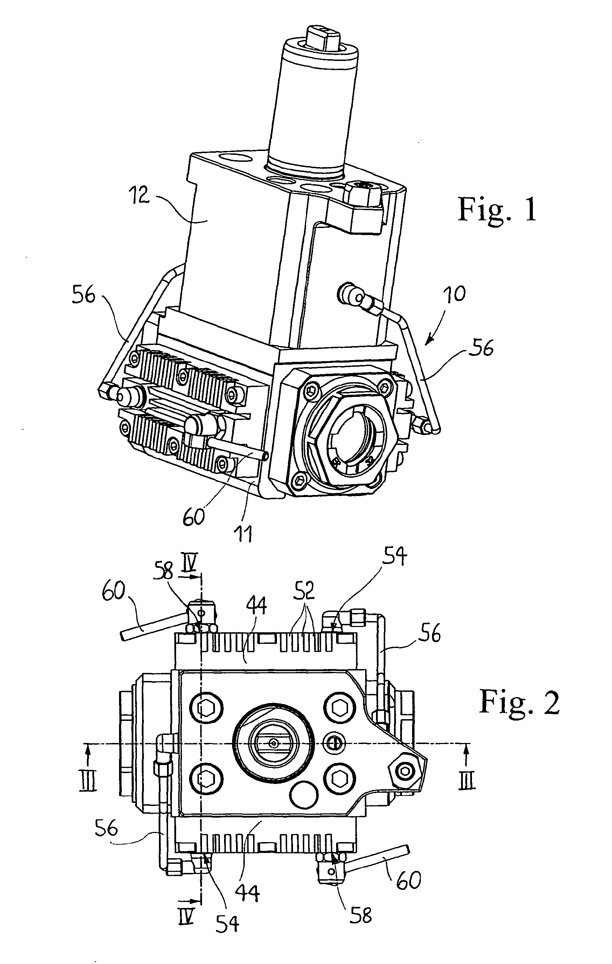

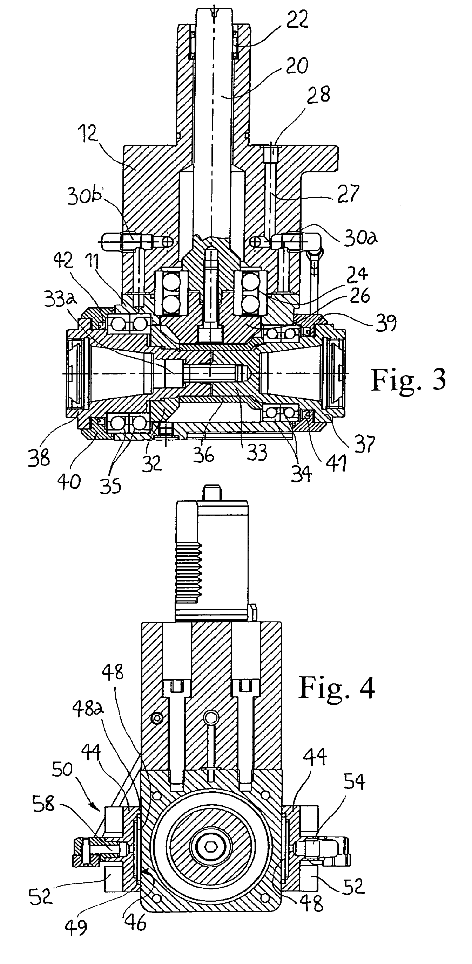

With reference to Figs. 1 to 4, a tool-holding gearbox 10 comprises a housing or box 11 attached to the tool-holding turret 12 of a general machine tool (not shown). A driving shaft 20 is pivotally supported within tool-holding turret 12 on bearings 22, 24. The end facing the gearbox of driving shaft 20 has a driving bevel gear 26 screwed thereto (which driving bevel gear, however, could also be made embloc). The tool-holding turret has a coolant-feeding channel 27 extending from an inlet 28, which is formed on an upper surface of the turret, to a first outlet 30a and to a second outlet 30b, which are formed on respective opposite sides of the turret and to which respective nozzles would be directly connectable.

Driving bevel gear 26 meshes with a driven bevel gear 32 keyed to a chuck 33 having its axis lying at right angles to the axis of driving gear 20. Chuck 33 is supported within box 11, on two pairs of bearings 34, 35 between which driven bevel gear 32 and a spacer 36 are sandwitched. Chuck 33 consists of two coaxial parts interconnected by a bolt 33a, and bears two tool-holding seats 37, 38 at its respective opposite ends, which face respective, opposite open sides of the gearbox. Tool-holding seats 37, 38 are surrounded by respective nuts 39, 40, which are screwed to the box for sandwitching the parts arranged therein, and are provided with lip seals 41, 42 which sealingly engage the outer surface of the tool-holding seats.

According to the invention, a cooling member is applied to each lateral side of gearbox 10. Each cooling member consists of a flat block 44 made of aluminum, which has a rectangular profile with a main face 46 abutted against a respective lateral side of the box. Main face 46 is provided with a depression 48 surrounded by a peripheral ledge 48a which contacts the wall of the box, and with a peripheral seal 49. An opposite, main face 50 bears a plurality of cooling fins such as 52 which are made embloc. Block 44 has an inlet port 54 near one of its longitudinal ends, which leads to depression 48 and is connected via a tube 56 to a respective one of outlets 30a or 30b of the tool-holding turret, as well as an outlet port 58 near the opposite longitudinal end, which has a nozzle 60 connected thereto. Nozzle 60 points to the machining area of a respective one of the tools which are mountable at the opposite ends of chuck 33.

The operation of a gearbox 10 according to the invention is similar to the operation of a conventional gearbox, in which a driving shaft 20 drives a chuck 33 via a pair of bevel gears 26, 32. The coolant is fed to outlets 30a, 30b via channels 27 in a conventionl way, but before being ejected from nozzles 60, it enters cooling member 44 through inlet ports 54 and is fed into the chamber defined between depression 48 and the wall of the box. The cooling blocks make use of the coolant to cool the gearbox by convection, and dissipate the heat by means of cooling fins 52. The direct contact between the coolant within depression 48 and the wall of the box, on a large surface such as the surface of depression 48, as well as the continuous refilling of fluid within the depression, make the heat dissipation particularly effective. It has been found in the practice that the presence of the cooling members in contact with the lateral sides of the box allows the operative temperature to be maintained substantially constant, after an initial transient, on a level equal to 50 to 60% of the maximum desirable temperature, at the reaching of which the machining would be conventionally stopped to allow the gearbox to be cooled off.

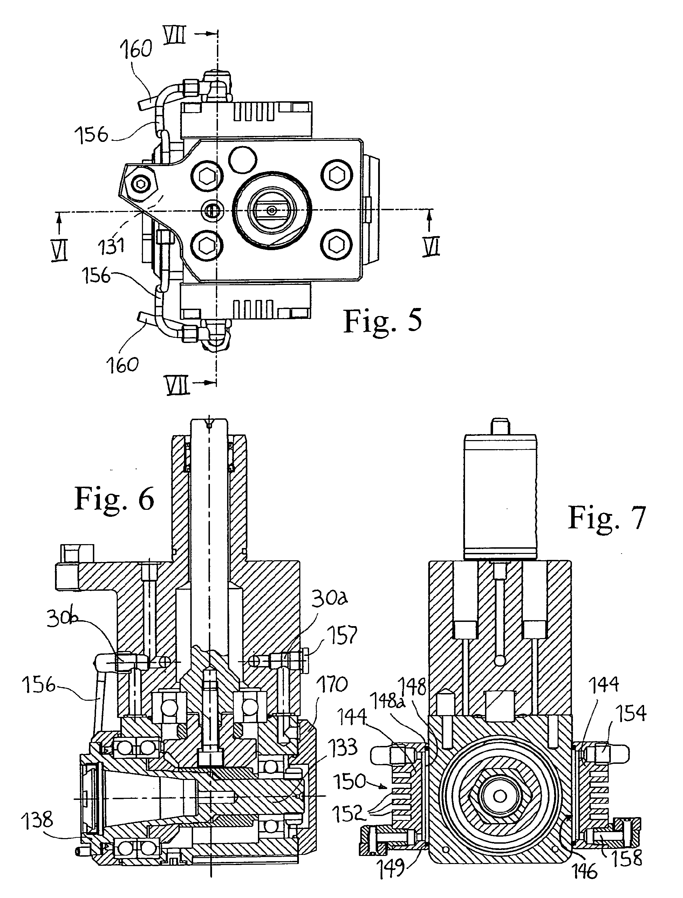

Figs. 5 to 7 show an alternative embodiment of the gearbox according to the invention, in which chuck 133 is provided, at one of its ends, with a sole tool-holding seat 138 facing a respective open side of the gearbox, the opposite side being closed by a cover 170. Also with this embodiment, both lateral sides of gearbox 110 have respective cooling members attached thereto, which are connected for receiving coolant from the turret and for delivering it by respective nozzles 160. However, differently from the previous embodiment, the cooling members receive the coolant from the same outlet 30b via a tee 131, the other outlet 30a being closed by a plug 157, and both nozzles 160 are pointed in such a way ass to deliver the coolant to the same side, i.e., towards the machining area of the sole tool mountable on the chuck. Similarly to the previous embodiment, the cooling members each consist of a flat block 144 made of aluminum and having a rectangular profile with a main face 146 abutted against a respective lateral side of the box. Main face 146 is provided with a depression 148 which is surrounded by a peripheral ledge 148a, and with a peripheral seal 149. An opposite main face 150 bears a plurality of cooling fins such as 152 which are made embloc. Block 144 has an inlet port 154 near its upper edge, which leads to depression 148 and is connected, via a tube 156, to outlet 30a of the tool-holding turret, as well as an outlet port 158 near its opposite edge, which has a respective nozzle 160 connected thereto.

A few preferred embodiments of the invention have been described herein, but of course many changes may be made by a person skilled in the art within the scope of the claims. For example, in certain cases the cooling action of a single cooling member applied to a lateral side of the gearbox or to the base thereof could be sufficient. Moreover, although the use of the cooling circuit, with which the machine tool is already provided, is particularly advantageous, it could be envisaged to use a dedicated, external hidraulic circuit. Furthermore, the chamber defined between depression 48 and the lateral wall of box 11 could be replaced by another passage of fluid having a different shape, e.g., a cooling coil. Moreover, the cooling block could be made of a material other than aluminum, e.g., steel.

## Claims

1. A tool-holding gearbox (10) attachable to the turret (12) of a machine tool, comprising a box (11) which incorporates a chuck (33) provided with a driven gear (32) meshing with a corresponding driving gear (26) supported on the tool-holding turret (12), **characterized in that** it comprises at least one cooling member consisting of a block (44, 144) provided with a first face (46) applied into contact with the outer wall of the box (11), and with a sealed passage (48, 148) extending from an inlet port (54, 154), which is connectable to coolant-feeding means, to an outlet port (58, 158), to which a nozzle (60, 160) pointing to the machining area of the chuck is connected.

2. The tool-holding gearbox of claim 1, **characterized in that** said passage consists of a chamber defined between a depression (48, 148) formed on said first face (46, 146) and the side wall of the box.

3. The tool-holding gearbox of claim 2, **characterized in that** said depression (48, 148) is surrounded by a peripheral ledge (48a) of said first face, which is in contact with the wall of the box.

4. The tool-holding gearbox of any of claims 1 to 3, in which said tool-holding turret has a coolant-feeding channel (27) leading to an outlet (30a, 30b, 130b), **characterized in that** said inlet port (54, 154) is connected to receive coolant from said outlet (56, 156).

5. The tool-holding gearbox of any of claims 1 to 4, **characterized in that** said block (44, 144) has a plurality of cooling fins (52, 152).

6. The tool-holding gearbox of claim 5, **characterized in that** said cooling fins are formed on a second face (50) opposed to the first face of the block (144).
